# EUROPEAN PATENT SPECIFICATION

(11) **EP 1 228 451 B1**
(45) Date of publication and mention of the grant of the patent: **10.12.2003**
(21) Application number: 00970385.1
(22) Date of filing: 03.10.2000
(51) Int. Cl.: G06F 17/30

(54) **AUTOMATIC FORM ACCESSING AND SUBMISSION SYSTEM AND METHOD**
AUTOMATISCHES FORMULARZUGANG- UND SENDE-SYSTEM UND VERFAHREN
SYSTEME ET PROCEDE DE DEMANDE ET D'ENVOI AUTOMATIQUES DE FORMULAIRES

(30) Priority: 05.11.1999 US 435129
(43) Date of publication of application: 07.08.2002
(60) Divisional application: 03102731.1
(73) Proprietor: Sign On I Stockholm Aktiebolag, 182 11 Danderyd (SE)
(72) Inventor: AXELSSON, Bengt, S-178 31 Ekerö (SE); HALVARSSON, Andreas, SE-114 53 Stockholm (SE)
(74) Representative: Johansson, Lars E.
(86) International application number: SE0001901
(87) International publication number: WO01033420

(56) References cited:
- A. DAYAO ET AL.: 'Super-forms: A security-enhanced smartelectronic form management system' GLOBAL-TELECOMMUNICATIONS CONFERENCE, 1990 AND EXHIBITION. COMMUNICATIONS: CONNECTING THE FUTURE, GLOBECOM '90, IEEE vol. 2, 02 December 1990 - 05 December 1990, pages 1079 - 1083, XP000220998
- R. HUBERMAN ET AL.: 'A generic forms handling tool and its application to network trouble management' COMMUNICATIONS, 1989. IC '89, BOSTONICC/89. CONFERENCE RECORD. WORLD PROSPERITY THROUGH COMMUNICATIONS, IEEE INTERNATIONAL CONFERENCE ON vol. 3, 11 June 1989 - 14 June 1989, pages 1170 - 1176, XP000075346

## Description

### BACKGROUND OF THE INVENTION

### FIELD OF THE INVENTION

This invention relates to a system and method for automatically accessing, processing and retransmitting data base records such as documents, via a network.

### DESCRIPTION OF THE RELATED ART

The modem world is full of forms -- application forms, order forms, response forms, insurance forms, ad (it often seems) infinitum. Indeed, this patent text itself will give rise to but one of hundreds of thousands of sets of forms this year alone under whose accumulate weight the shelves of the patent office -- and those whose job it is to process them -- groan.

Along with the advent of the office computer came the promise of the Shangri La-like "paperless office." Anyone reading this text who looks around his own work area probably needs no further proof that this electronic paradise is far from realized.

One development that shows great promise not only for reducing the amount of paperwork but also for making the routing of the paperwork more efficient is the widespread use of networks such as the Intemet. In general, network-based forms are handled in the same way as electronic mail (e-mail). For example, when ordering, say, a book over the Internet, one accesses and downloads an order form, often simply by clicking on an icon, fills out the form, and then submits it directly back to the same server from which it was downloaded. This procedure is simplified precisely because the return address is simply the "reply" address of the e-mailed form. In other applications, such as submitting internal forms such as travel expense reports over a company-specific network, one may not automatically have the return address. To the extent that forms are now made available over networks, however, they are treated similarly, namely, as any other e-mail message.
This conventional arrangement has several disadvantages. First, one must often manually specify the receiver of the e-mail. This often leads to the problem of misspelling the recipient's e-mail address, especially since addresses are frequently not intuitive. Another disadvantage is that data retrieval at the receiver's side, that is, the facility where the transmitted form is received and processed, must be handled manually.

Yet another shortcoming is that there is no automation in receiving data from a form attached to an e-mail. This is true even when the form is transmitted using a word-processing format from the same provider that makes the e-mail application, such as when a Microsoft Word file is attached to e-mail sent via Microsoft Outlook. This need to either reenter or transcribe the submitted data increases the likelihood of data error. Yet another disadvantage is that the success of the user's system to transmit a form at all will often depend on the actual mail client software. Moreover, there is no way to handle data in an e-mail attachment online.

Still another serious shortcoming of existing systems is that the level of security they offer is often inadequate. Indeed, many browsers and e-mail software packages include the ability to encrypt the message one is sending, but this encryption is intended primarily to prevent network "wiretapping," that is, the unauthorized interception and reading of the transmitted message by a party other than the intended recipient. The recipient of such a conventionally encrypted message, however, has no way to uniquely identify the actual sender.

From D1 = "Super-forms: A security-enhanced smart electronic form management system", A. Dayao et al., Global-telecommunications conference, 1990 and exhibition. Communications: Connecting the future, Globecom '90, IEEE'," 2//02-12-1990, 1079-1083, 05-12-1990, there is known a system for accessing, processing and transmitting data files comprising, a multi-function server with a data base system and a transaction tracking system connected to a local network. Further there are also local processing systems connected to the network. The data base system forms a means for storing a plurality of predefined forms. By means of the system a user can register changes to a downloaded form, which form thereafter is transferred via the network to a predefined node in the network via the central server. This known system, however, presents several disadvantages. Firstly it is restricted in its use, by the use of predefined forms/files and the use of local area network/s. Moreover the system is inflexible and vulnerable due to the use of a multi-function server.

What is needed is an improved system that allows a user to quickly access a needed form, to fill it out, and then to submit it with minimal inconvenience and risk of error to the correct user. At the receiving end, it should be possible to put the data directly into a database or workflow system, with no need to reenter or transcribe the submitted data. The system should be independent of the mail client and the web browser used. The system should preferably be able to provide an effectively immediate receipt of a submitted form and it should preferably also be possible not only to encrypt submitted data, but also to uniquely identify and authenticate the identity of the sender of a form. This invention provides such a system, and a related method of operation.

### SUMMARY OF THE INVENTION

The invention provides a system for accessing, processing and transmitting data files, especially documents, using a data network. A data base system, at least one local processing system, a notary server, and at least one recipient system form the main components of the invention. The data base system, each local processing system, the notary server and each recipient system are preferably independent systems, all connected to the network. The data base system stores a plurality of data files, for example, documents in any standard format. Each data file is associated with a corresponding one of the recipient systems, and can be transferred by the data base system via the network to the local processing system.

Using one of the local processing systems, the user addresses the data base system, and selects one or more of the stored files, which is downloaded via the network from the data base system. The user then edits -- changes, fills in, etc. -- the downloaded file(s), whereupon, by activating a "send" or similar feature inserted locally into or along with the file, the user submits the form to a notary server via the network. The notary server receives each submitted data file and, after additional processing such as user verification, file backup, time-stamping and receipt transmission back to the user, sends the verified form to the respective recipient system.

Each data file is preferably submitted from the local processing system to the notary server in an encrypted form. A digital signature is preferably also appended to each submitted file. Public-key encryption is preferably used both to encrypt submitted forms and to generate the digital signature.

### BRIEF DESCRIPTION OF THE DRAWINGS

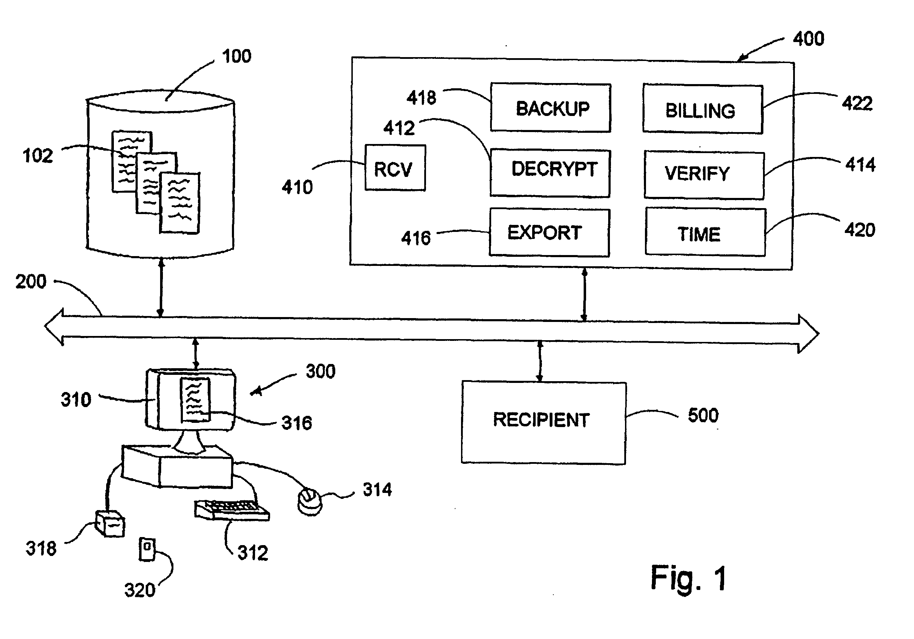

Figure 1 is a block diagram of the main components of a system according to the invention for accessing, completing, submitting, verifying and routing forms over a network.

### DETAILED DESCRIPTION

Figure 1 shows the main components of the preferred embodiment of the system according to the invention. In the following discussion, the term "form" is to be understood as meaning any data record or file that a user may wish to access, view, edit or otherwise change, and then submit to a recipient facility or system. In most applications of the invention, the forms will be documents composed or stored in some standard word-processing format such as Microsoft Word or Corel Word Perfect, or in some other format that allows for user entry directly into the document text, such as Adobe Acrobat PDF files. The invention is not restricted to any particular format, however; indeed, this is one of the advantages of the invention.

A central data base 100 contains a set of electronically stored forms 102, as well as the conventional hardware (such as a server) and software necessary to allow data base records to be accessed by an external system, in particular, via a network. In most cases, the invention will be used to enable a user to access one or more forms, to fill it out or change it, and then to submit it to the respective recipient(s). Different recipients may, and in general will, subscribe to or be destinations for the system according to the invention. Each recipient may specify its own form file format; the forms 102 are stored in whatever format each respective recipient uses.

In order to build up the data base 100, the administrator of the system may either receive the forms directly -- for example on disk, or by making them available for downloading -- from whatever entity wishes its forms to be accessible, or the system may conventionally download publicly accessible forms from chosen recipient sites, or both.

The entity that provides or generates the forms will typically be the same entity that expects to receive them, completed, from users. This is not necessary according to the invention, however. Rather, the form provider may be different from the intended recipient, as is the case, for example, with companies who provide standard legal forms for submission to courts or other government entities. In other words, the entities that provide or generate the forms stored in the data base 100 need not necessarily be the same as the intended recipient entities, although this will be the most common case.

The data base 100 is connected to a network 200. A user is also able to access the network 200 using any known local processing system 300 such as a personal computer (PC). In Figure 1, only one local processing system is shown merely for the sake of simplicity. The invention will work -- indeed, is most advantageous -- even for large numbers of users, each with access to the network 200, and thus to the data base 100, using either a dedicated or a shared local processing system.

In the most general use of the invention, the network 200 will be a wide-area public network, preferably the Internet. This is also not necessary -- the network may be any wide or local area network, and may even be a proprietary network such as the intra-networks found in many companies. These intra-networks may in turn be connected through conventional gateway servers to the public network. What is needed according to the invention is simply that each user should be able to contact the data base 100 via the network, designate one or more forms, and then be able to receive these forms, all via the network 200.

In the preferred case in which the network is the Internet, the server or other system through which the data base is accessible, the data base or some gateway screen into it will simply have a standard network address, such as a universal resource locator (URL). The user may then designate a form to be transferred from the data base either by selecting it from any standard displayed menu, or, if known, by designating a subaddress where the form is located. Such an ordering of files is common in the design of sites not only for the World-Wide Web (WWW) but for other hierarchical or otherwise linked files accessible through other networks as well.

There are several ways in which users could be informed about which forms are available for downloading from the data base 100. For example, the user could simply browse an on-line menu of available forms, organized, for example, by subject area or category of provider. The site or gateway program associated with the data base 100 could also be provided with a conventional search engine to make it easier to find a desired form. If each form is identifiable by a particular URL, a provider of forms could also make the various URL's of available forms known in a web site of its own, by sending the address of the appropriate form to the user, for example, via e-mail, in response to a query, or in any other conventional manner.

The invention also includes a notary server 400, which is also connected for two-way data transfer to the network 200. The function of the notary server is explained below.

Finally, one or more recipient servers or systems 500 are also connected to the network 200. Once again, only one such system is illustrated in Figure 1 merely for the sake of simplicity; in most applications of the invention, there will be a large number of recipients. A recipient may be any of the several different types of facilities that are able to receive documents or other files via the network 200. Systems such as external data bases, workflow or document management systems, or mail servers for companies or government entities are just some examples.

Before delving into the details of the invention, consider an example of one possible use in order to get a more general idea of the method of operation of the invention. Assume that a user wants to submit, for example, change of correspondence address form for a U.S. patent. As it is now, the user must either write a letter, or download, print out, complete and mail in or fax the appropriate request form to the Patent Office. As of 27 August 1999, in the USA, this is Form PTO/SB/123, available in PDF format and downloadable from the network address http://www.uspto.govlweb/forms/sb0123.pdf. A paper form is at present necessary because the Patent Office must be able to confirm, by the name and signature of the requester, that the person requesting the copy is in fact authorized to receive it.

Now imagine (one hopes that imagination will not be needed long) that the Patent Office has a server that is connected to the network 200, and that the request form is included as one of the forms 102 in the data base 100. Note that it could be stored as the same PDF file, and that the data base administrator could simply have downloaded the form, along with the other publicly available Patent Office forms, from the web site of the Patent Office, by scanning in the forms, or by receiving them on a standard readable medium from the Patent Office itself. Form providers (who will in general also be the recipients 500 of the forms) might choose to have their forms included in the data base 100 -- even if it were necessary to pay a subscription fee to the owner/administrator of the data base -- for any of several reasons. They may realize that electronic delivery and submission of forms is more efficient and thus reduces their own administrative work load; they may prefer not to have to maintain their own on-line data base; or they may simply want their forms readily available as a convenience to their customers or to the public.

According to the invention, the user accesses ("logs onto") the network 200 via the local processing system 300 in any conventional manner. He then specifies the network address of the data base 100 and selects the form he needs to download, for example the change of address form. This data base server then transfers the file corresponding to the requested form via the network 200 to the local processor 300, which then displays it to the user, for example, on a standard monitor 310. As an alternative, as long as the file containing the form includes data that enables its use in the invention (described below), then the user could also receive the form by e-mail, or on a readable medium. It is also possible that the user might receive, either via the network or on a readable medium, a set of forms enabled for use in the invention. For example, all the standard forms of the Patent Office could be made available to users, either gratis or for a fee, along with the data necessary to incorporate them for use into the system according to the invention.

Using standard input devices, such as a keyboard 312 and a cursor controller 314 such as a mouse, trackball, touch pad, or the like, the user then enters needed information into the respective input fields of the displayed form - he completes or "fills in" the form on-screen. The user then activates a "send" feature, for example, by clicking on a "send" or "submit" icon 316 displayed as part of or in conjunction with the displayed form, or by pressing an assigned function key. The local system then preferably encrypts and then transmits the now completed form back via the network 200 to the notary server 400, for example, by forwarding it to the predetermined network address of the notary server.

When the notary server 400 receives a form from a user, it decrypts the form if encrypted, verifies the identity of the user and then transmits (exports) the form to the designated recipient of the form. As is described further below, public key encryption is preferably used during transfer of a form from the user to notary server. In these cases, the step of verifying the identity of the user may include standard sub-steps such as verifying the authenticity of the user's public key certification.

These functions are preferably carried out in respective software modules for reception 410, decryption 412, user/sender verification 414, and file export 416 and may be designed in any conventional manner. Before exporting the form to the recipient, the notary server preferably also saves a backup copy in a backup memory 418, along with a time stamp generated in any conventional manner in a time stamp module 420. Other software modules such as for administrative functions such as billing 422 (in applications where users must pay to submit or receive forms using the invention) may also be included as needed.

Once the notary sever has exported the submitted form to the appropriate recipient system (for example, by transmitting it to the corresponding network address), then the notary server preferably transmits a submission receipt back via the network back to the local processing system 300. This transmission receipt preferably identifies which form was sent to which recipient system, by whom, and at what time. If the recipient system 500 also includes the ability to generate and return a receipt acknowledgment, then a copy or indication of this may also be returned to the original user as part of the receipt. One other receipt option is that the notary server returns to the user's local processor an e-mail copy of the submitted form, possibly augmented with the submission information as mentioned above.

The network address of the recipient system for each form may be recorded in different ways. For example, a field (perhaps hidden, to reduce the risk of misdirection or error as a result of user editing) may be included in the form file itself. In most applications of the invention, the notary server will assign some identifier, such as an alphanumeric code, to each form included in the system. The notary server may then maintain a table matching each form with the correct recipient's network address B when a form is received from a user, then the notary server enters the address table using the corresponding identifier of the form as the argument and retrieves the corresponding, proper network address of the recipient.

In order for a user to be able to submit a form using the invention, the form, that is, the data file including the document to be submitted, must include certain data that enables its use in the invention. For example, at the least it must include some identifier that associates it with its proper recipient. Such additions can be made in any conventional manner, for example, simply by appending them to the form file according to any predefined protocol.

In order for the user's local processor to be able to recognize such appended data, to generate such items as a "submit" icon (if it isn't included in the downloaded file itself), and to encrypt submitted data (if this feature is included), then the processor 300 must be loaded with at least some dedicated enabling software. This enabling software may be made available for installation into the user's local processor in any conventional manner, for example, either by giving the user a disk, or by making the program available for downloading into the processor via the network.

The modules of the enabling software may be designed in any conventional manner. It will include a standard application program interface (API), which is preferably open. The software modules will include a module for generating a base screen, that is, the screen the user opens to identify which form he wants; an engine for automatically connecting the local processor to the network 200 (or for submitting an address if a network connection is already open), and for downloading a selected form from the data base 100; a module for formatting and displaying the downloaded form, along with such items as a "submit" or "send" icon; a module for inserting user-entered data into the appropriate fields of the displayed form; preferably a module for encrypting the form before submission (if encryption is included); a module for submitting the form via the network; and a module for sensing and presenting to the user a transmission receipt.

The various modules may be designed using any of several known techniques, or in combination with existing software on the local processor. For example, the modules that process the form can be written in Java, C++ or in HTML (or XML), or even in HTML with embedded Java applets; and the encryption routine may be third-party software that is already commercially available. The software could even be integrated into existing e-mail or browser software.

The type of software installed in the local processor 300 will also determine in what way forms should preferably be stored in the data base 100. For example, if it is assumed that forms in the data base may be in the formats of the form providers, for example, some in Microsoft Word format, some in Corel Word Perfect format, and some in PDF format, then either all the stored forms must be converted by the data base system 100 into a common format that the local processor's software can read, or else the local processing software must include the routines necessary to read, display and edit forms in the formats that the user may want to download. For the sake of ease of use, it is therefore preferable that all forms in the data base system 100 should be in (or be converted to) a predetermined format that the local processing software can interpret.

Data included on submitted forms - indeed, the fact that the user wishes to submit a particular form at all - will often be a confidential matter for the user. The invention therefore preferably includes an encryption feature for submitted forms. In the preferred embodiment of the invention, forms are submitted using public key encryption. This also allows each form to be identified using a conventional "digital signature."

Public key encryption as such is known. It uses two "keys": a public key, which can be made available to all potential senders, and a corresponding private key, which is held in secret by the recipient. In practice, each public/private key pair consists of large prime numbers with a predetermined functional -- and unique -- relationship to each other. The public key is sufficient to encrypt a message for transmission, but the private key is necessary to decrypt it. In other words, once a sender encrypts a message using the public key, then he himself cannot decrypt it.

Assume now that a form provider (or some other entity) issues identification numbers to potential users of the invention. If these ID numbers are also encryption keys registered to and associated uniquely with the individual users, then a unique data string encrypted using one of these keys and transmitted along with the actual message would function as a "digital signature" on the recipient's end. Accordingly, the local processing system 300 preferably includes a software module that includes such a uniquely encrypted data string ("digital signature") along with any form that it transmits to a recipient via the network.

Due to the nature of the public and private keys -- unlike common passwords, they are typically strings of thousands of many-bit (for example, 24 or more) data words -- it is not practical for the user simply to memorize the keys. If the local processing system 300 is uniquely dedicated to a particular user, then it is possible to store the key for the digital signature in the memory of the system itself. Of course, there is no need for concern about the keys used to encrypt forms transmitted to particular form recipients - by definition, these will be public keys.

The problem arises in most applications, however, that local computers are seldom so secure that one would want to store a private key on them. Moreover, if a user's digital signature key is stored on a single computer, then he will not be able to use the invention on other computers, at least not if he wishes to or is required to include his digital signature in a submitted form.

Encryption of forms is therefore preferably carried out using a reader 318 that is connected to or included in the local processing system 300 in order to read a conventional smart card 320, or similar portable memory device. The personal user parameters (including, for example, the keys) of the encryption algorithm are then encoded on the smart card and can be read in when a form is to be submitted. This ensures that only the user will be able to know which forms are submitted, and what personal data is included in them, even if someone else has access to the local processing system itself. Because public key encryption is a known technique, any conventional software may therefore be used in conjunction with the invention to implement the encryption module in the local processing system and the decryption module 412 of the notary server.

The ability of a user to access, complete and submit forms according to the invention can also be used to enable communication with an arbitrary network-accessible data base. In this case, when the user completes and submits a form via the notary server, he may also enter data base queries in appropriate, pre-determined fields in the submitted form. When the recipient system 500 then receives the form, it may automatically decode the query (using known routines), and transfer a response back to the sender via the network.

For example, assume that a bank customer wants to get a copy of a previous month's statement for one of his accounts. As it is now, the customer must telephone in this request to a customer service center, which then orally authenticates the customer's right to the information, bills his account some small amount, and then mails or faxes the statement to the customer. Not only does this require there to be a customer service agent, but it also usually involves a delay of several days, since the bank's data base must be accessed and a paper copy of the statement (which may be stored as an image or be accessible only through conversion from microfilm) is printed and mailed to the requesting customer.

Using this embodiment of the invention, the user would instead be able to access a request form from the data base 100, which acts as a form archive, and then submit it securely to the recipient system at the bank, via the notary server. If the bank's recipient system is programmed (using standard routines) to directly interpret and respond to queries entered into the submitted form, then it will be able to respond to the user's request without further complication.

In many cases, however, the data base located with the recipient system will not be set up to interpret forms, but rather will respond only to queries and commands presented in a standard data base command format such as ODBC. One way to handle this would be for ODBC software to be installed in each local processing system for each client/user. This will in most cases be impractical, however, and prone to error. Instead, according to the invention, the data base access software may be included in the notary server. Whenever a submitted form is destined for a recipient system identified as a data base that responds to queries, the notary server then simply converts (again, using known routines) the fields of the submitted form corresponding to data base access requests into data base commands in the appropriate format, such as ODBC. The client will thus be able to communicate with the notary server using a more common format such as html, while communication with the recipient system's data base can be carried out in more specialized data base access protocols, with no need for specialized software to be installed on the client's local processing system. Note that it would also be possible using this same arrangement for the client to enter data into the recipient system's data base, as well as to download information from it.

Security is of course very important when accessing data bases that contain private or proprietary information. Along with the request for access to the recipient system's data base, the user will therefore include in the submitted request form any pre-arranged authentication and identification codes, which the recipient system will check against pre-stored records to determine whether the requesting user is authorized to receive the requested information before it is transferred to the user.

As yet another extension of this embodiment, the user could request access to data base information but then direct it to be transferred to yet a different recipient who is connected to the network and is part of the same system. For example, it is common for a lender to request copies of bank statements from a borrower before approving a loan. As things stand now, the borrower usually must either arrange for the bank to send copies to the lender, or he must sign some authorization for the lender to receive these records. Using the invention, the potential borrower could download a form requesting a statement from the bank, but then to include in the appropriate field the network address of the lender to which the statement should be forwarded.

This system would also allow for transfer of records that not even the user has access to. For example, medical centers will normally not release to a patient his own medical records. Life or health insurance companies require such records, however, before approving coverage. Using the invention, the user could download a medical record request form, then submit it, via the notary server, to the medical center, along with a network address to the insurance company. This would greatly speed up the submission and application process without compromising any secrecy.

## Claims

1. A system for accessing, processing and transmitting data files comprising:
a server (400),
a network (200);
a data base system (100) and a transaction tracking system connected to the network, at least one local processing system (300) independently connected to the network, and,
at least one recipient system (500) connected to the network,
the data base system (100) forming means for storing a plurality of data files (102), each comprising a form,
and for transferring the data files (102) via the network to the local processing system;
each local processing system (300) forming means for addressing the data base system, for downloading via the network at least one user-selected data file stored in the data base system, for registering user-entered changes to the downloaded data file, and for transferring the changed data file as a submitted data file via the network;
and the server (400), forming means for receiving each submitted data file via the network, and for transferring each submitted data file to a recipient with which the submitted data file is associated,
**characterised in,**
**that** said network (200) is a general-purpose, wide-area network
**that** said data base (100) system forms an independent system connected to the network;
**that** said transaction tracking system is implemented in said server (400) operating as notary server (400) which forms an independent system connected to the network, that said at least one recipient system (500) is independently connected to the network,
**that** each form (102) is in a substantially arbitrary but predetermined format that may differ from the format of other forms in the data base system (100),
**that** each form (102) includes an identifier that associates it with its proper recipient system , and,
**that** each submitted data file is transferred by means of said notary server (400) to the recipient server (500) with which it is associated.

2. A system as in claim 1, **characterised in that** the local processing system (300) further forms means for encrypting submitted data files (102) using public-key encryption.

3. A system as in claim 2, **characterised in that** the local processing system (300) further forms means for appending to each submitted form a public key-encrypted digital code uniquely identifying the user to the recipient system (500) with which the submitted form is associated.

4. A system as in claim 3, **characterised by** further including:
a portable memory device(320) storing personal user encryption parameters; and
a reader (318) that is attached to the local processing system (300) for reading the user encryption parameters from the portable memory device (320).

5. A system as in claim 1 or 2, **characterised in that** the data files (102) are documents stored in any standard document format.

6. A system as in claim 1 or 2, **characterised in that** the notary server (400) further comprises a software module to enable communication with an arbitrary network-accessible data base.

7. A method for accessing, processing and transmitting data files within a system as in claim 1, comprising a plurality of data files (102) stored in a data base system (100), which is connected to a wide-area network (200), each file (102) being associated with a corresponding recipient system (500);
**characterised in** the following steps:
using a local processing system (300), addressing the data base system (100) via the network (200) to select at least one of the stored data files (102);
downloading via the network the user-selected data files (102);
editing the downloaded data files (102) in the local processing system (300); transferring the edited data files (102) as a submitted data files (102) to a notary server (400) via the network (200); and
transferring each submitted data file (102) from the notary server (400) to the recipient system (500) with which the data files (102) is associated.

8. A method as in claim 7, further including the step of encrypting submitted data files (102) using public-key encryption.

9. A method as in claim 8, further including the step of appending to each submitted form a public key-encrypted digital code uniquely identifying the user to the recipient system (500) with which the submitted form is associated.

10. A method as in claim 7, further including the following steps:
including in the submitted data files (102) a data base access request;
in the notary server (400), converting the data base access into a pre-determined data base access protocol and transmitting the converted data base access to the recipient; and
downloading from the recipient data base information corresponding to the data base access request.

## Patentansprüche

1. System zum Zugreifen auf, Bearbeiten und Übertragen von Datendateien, umfassend:
einen Server (400),
ein Netzwerk (200);
ein Datenbank-System (100) und ein Transaktionsverfolgungs-System, das mit dem Netzwerk verbunden ist,
mindestens ein lokales Verarbeitungssystem (300), das unabhängig mit dem Netzwerk verbunden ist, und
mindestens ein Empfänger-System (500), das mit dem Netzwerk verbunden ist,
wobei das Datenbank-System (100) Mittel zum Speichern einer Vielzahl an Datendateien (102), die jede ein Formular umfassen, und zum Übertragen der Datendateien (102) über ein Netzwerk zu dem lokalen Verarbeitungssystem bildet;
mindestens ein Empfängersystem (500), das mit dem Netzwerk verbunden ist,
wobei jedes lokale Verarbeitungssystem (300) Mittel zum Adressieren des Datenbank-Systems, zum Herunterladen von mindestens einer Benutzer-gewählten Datendatei über das Netzwerk, die in dem Datenbank-System gespeichert ist, zum Registrieren Benutzereingegebener Änderungen an der heruntergeladenen Datendatei und zum Übertragen der geänderten Datendatei als eine übermittelte Datendatei über das Netzwerk bildet,
und wobei der Server (400) Mittel zum Empfangen jeder übermittelten Datendatei über das Netzwerk und zum Übertragen jeder übermittelten Datendatei an einen Empfänger bildet, dem die übermittelte Datendatei zugeordnet ist,
**dadurch gekennzeichnet,**
**dass** das Netzwerk (200) ein universelles Weitverkehrsnetzwerk ist,
**dass** das Datenbank-System (100) ein unabhängiges System bildet, das mit dem Netzwerk verbunden ist,
**dass** das Transaktionsverfolgungs-System in dem Server (400) implementiert ist, der als Notarserver (400) arbeitet, der ein unabhängiges System bildet, das mit dem Netzwerk verbunden ist,
**dass** das mindestens eine Empfängersystem (500) unabhängig mit dem Netzwerk verbunden ist,
**dass** jedes Formular (102) in einem im wesentlichen beliebigen aber vorbestimmten Format ist, das sich von den Formaten anderer Formulare in dem Datenbank-System (100) unterscheiden kan n,
**dass** jedes Formular (102) eine Kennung einschließt, die es seinem geeigneten Empfängersystem zuordnet, und
**dass** jede übermittelte Datendatei mit Hilfe des Notarservers (400) an den Empfängerserver (500) übertragen wird, dem sie zugeordnet ist.

2. System gemäß Anspruch 1, **dadurch gekennzeichnet, dass** das lokale Verarbeitungssystem (300) ferner Mittel zum Verschlüsseln von übermittelten Datendateien (102) unter Verwendung von Public-Key Verschlüsselung bildet.

3. System gemäß Anspruch 2, **dadurch gekennzeichnet, dass** das lokale Verarbeitungssystem (300) ferner Mittel zum Anfügen eines Public-Key verschlüsselten digitalen Codes an jedes übermittelte Formular bildet, der den Benutzer gegenüber dem Empfängersystem (500) eindeutig identifiziert, dem das übermittelte Formular zugeordnet ist.

4. System gemäß Anspruch 3, **gekennzeichnet durch** ferner :
eine tragbare Speichervorrichtung (320), die persönliche Benutzerverschlüsselungs-Parameter speichert, und
eine Lesevorrichtung (318), die mit der lokalen Verarbeitungsvorrichtung (300) verbunden ist, um die Benutzerverschlüsselungs-Parameter von der tragbaren Speichervorrichtung (320) zu lesen.

5. System gemäß Anspruch 1 oder 2, **dadurch gekennzeichnet, dass** die Datendateien (102) Dokumente sind, die in irgendeinem Standard-Dokumentenformat gespeichert sind.

6. System gemäß Anspruch 1 oder 2, **dadurch gekennzeichnet, dass** der Notarserver (400) ferner ein Softwaremodul umfasst, um eine Kommunikation mit einer beliebigen Netzwerkzugreifbaren Datenbank zu ermöglichen.

7. Verfahren zum Zugreifen, Bearbeiten und Übertragen von Datendateien innerhalb eines Systems wie in Anspruch 1, das eine Vielzahl an Datendateien (102) umfasst, die in einem Datenbank-System (100) gespeichert sind, das mit einem Weitverkehrs-Netzwerk (200) verbunden ist, wobei jede Datei (102) einem entsprechenden Empfängersystem (500) zugeordnet ist,
**gekennzeichnet durch** die folgenden Schritte:
Verwenden eines lokalen Verarbeitungssystems (300), Adressieren des Datenbank-Systems (100) über das Netzwerk (200), um mindestens eine der gespeicherten Datendateien (102) auszuwählen,
Herunterladen der Benutzer-gewählten Datendateien (102) über das Netzwerk,
Bearbeiten der heruntergeladenen Datendateien (102) in dem lokalen Verarbeitungssystem (300),
Übertragen der bearbeiteten Datendateien (102) als übermittelte Datendateien (102) an einen Notarserver (400) über das Netzwerk (200), und
Übertragen jeder übermittelten Datendatei (102) von dem Notarserver (400) an das Empfängersystem (500), dem die Datendateien (102) zugeordnet sind.

8. Verfahren gemäß Anspruch 7, das ferner den Schritt des Verschlüsselns von übermittelten Datendateien (102) unter Verwendung von Public-Key Verschlüsselung einschließt.

9. Verfahren gemäß Anspruch 8, das ferner den Schritt des Anfügen eines Public-Key verschlüsselten digitalen Codes an jedes übermittelte Formular einschließt, der den Benutzer gegenüber dem Empfängersystem (500) eindeutig identifiziert, dem das übermittelte Formular zugeordnet ist.

10. Verfahren gemäß Anspruch 7, das ferner folgende Schritte einschließt:
- Einfügen einer Datenbankzugriffs-Anfrage in die übermittelten Datendateien (102),
- Umwandeln des Datenbankzugriffs in ein vorbestimmtes Datenbankzugriffs-Protokoll in dem Notarserver (400) und Übertragen des umgewandelten Datenbankzugriffs an den Empfänger, und
- Herunterladen von Informationen von der Empfänger-Datenbank, die der Datenbankzugriffs-Anfrage entsprechen.

## Revendications

1. Système pour accéder à, traiter et transmettre des fichiers de données comprenant :
un serveur (400),
un réseau (200) ;
un système de base de données (100) et un système de suivi de transaction connectés au réseau,
au moins un système de traitement local (300) connecté de manière indépendante au réseau, et
au moins un système destinataire (500) connecté au réseau,
le système de base de données (100) formant des moyens pour mémoriser une pluralité de fichiers de données (102), comprenant chacun un formulaire,
et pour transférer les fichiers de données (102), par l'intermédiaire du réseau, au système de traitement local ;
chaque système de traitement local (300) formant des moyens pour adresser le système de base de données, pour télécharger, par l'intermédiaire du réseau, au moins un fichier de données sélectionné par un utilisateur mémorisé dans le système de base de données, pour enregistrer des modifications entrées par un utilisateur dans le fichier de données téléchargé, et pour transférer le fichier de données modifié en tant que fichier de données confirmé par l'intermédiaire du réseau ;
et le serveur (400), formant des moyens pour recevoir chaque fichier de données confirmé par l'intermédiaire du réseau, et pour transférer chaque fichier de données confirmé à un destinataire auquel le fichier de données confirmé est associé,
**caractérisé en ce que**,
ledit réseau (200) est un réseau étendu d'utilisation générale ;
ledit système de base de données (100) forme un système indépendant connecté au réseau ;
ledit système de suivi de transaction est mis en oeuvre dans ledit serveur (400) servant de serveur de notarisation (400) qui forme un système indépendant connecté au réseau ;
ledit au moins un système destinataire (500) est connecté de manière indépendante au réseau ;
chaque formulaire (102) est dans un format sensiblement arbitraire mais prédéterminé qui peut différer du format d'autres formulaires dans le système de base de données (100) ;
chaque formulaire (102) comprend un identificateur qui l'associe à son propre système destinataire ; et
chaque fichier de données confirmé est transféré au moyen dudit serveur de notarisation (400) au serveur destinataire (500) auquel il est associé.

2. Système selon la revendication 1, **caractérisé en ce que** le système de traitement local (300) forme, en outre, des moyens pour chiffrer des fichiers de données (102) confirmés en utilisant un chiffrement à clé publique.

3. Système selon la revendication 2, **caractérisé en ce que** le système de traitement local (300) forme, en outre, des moyens pour joindre à chaque formulaire confirmé un code numérique chiffré à clé publique identifiant de manière unique l'utilisateur pour le système destinataire (500) auquel le formulaire confirmé est associé.

4. Système selon la revendication 3, **caractérisé en ce qu'**il comprend en outre :
un dispositif de mémoire portable (320) mémorisant des paramètres personnels de chiffrement d'utilisateur ; et
un dispositif de lecture (318) qui est fixé au système de traitement local (300) pour lire les paramètres de chiffrement d'utilisateur dans le dispositif de mémoire portable (320).

5. Système selon la revendication 1 ou 2, **caractérisé en ce que** les fichiers de données (102) sont des documents mémorisés dans n'importe quel format de document standard.

6. Système selon la revendication 1 ou 2, **caractérisé en ce que** le serveur de notarisation (400) comprend, en outre, un module logiciel pour permettre une communication avec une base de données accessible de manière arbitraire par l'intermédiaire d'un réseau.

7. Procédé pour accéder à, traiter et transmettre des fichiers de données dans un système selon la revendication 1, comprenant une pluralité de fichiers de données (102) mémorisés dans un système de base de données (100), qui est connecté à un réseau étendu (200), chaque fichier (102) étant associé à un système destinataire (500) correspondant ;
**caractérisé par** les étapes suivantes :
l'utilisation d'un système de traitement local (300), l'adressage du système de base de données (100) par l'intermédiaire du réseau (200) pour sélectionner au moins l'un des fichiers de données (102) mémorisés ;
le téléchargement, par l'intermédiaire du réseau, des fichiers de données (102) sélectionnés par un utilisateur ;
la modification des fichiers de données (102) téléchargés dans le système de traitement local (300) ;
le transfert des fichiers de données (102) modifiés en tant que fichiers de données (102) confirmés à un serveur de notarisation (400) par l'intermédiaire du réseau (200) ; et
le transfert de chaque fichier de données (102) confirmé du serveur de notarisation (400) au système destinataire (500) auquel les fichiers de données (102) sont associés.

8. Procédé selon la revendication 7, comprenant en outre l'étape consistant à chiffrer des fichiers de données (102) confirmés en utilisant un chiffrement à clé publique.

9. Procédé selon la revendication 8, comprenant en outre l'étape consistant à joindre à chaque formulaire confirmé un code numérique chiffré à clé publique identifiant de manière unique l'utilisateur pour le système destinataire (500) auquel le formulaire confirmé est associé.

10. Procédé selon la revendication 7, comprenant en outre les étapes suivantes :
l'introduction, dans les fichiers de données (102) confirmés, d'une requête d'accès à une base de données ;
dans le serveur de notarisation (400), la conversion de l'accès à une base de données en un protocole d'accès à une base de données prédéterminé et la transmission de l'accès à une base de données converti au destinataire ; et
le téléchargement, à partir du destinataire, d'informations de base de données correspondant à la requête d'accès à une base de données.
